# EUROPEAN PATENT APPLICATION

(11) **EP 4 804 305 A1**
(43) Date of publication of application: **09.09.2026**
(21) Application number: 25761627.6
(22) Date of filing: 30.01.2025
(51) Int. Cl.: H01M 50/153, H01M 50/56, H01M 50/109, H01M 50/131, H01M 50/167, H01M 50/184, H01M 50/545, H01M 50/559

(54) **NEGATIVE ELECTRODE CASE FOR ALKALINE PRIMARY BUTTON BATTERY, AND ALKALINE PRIMARY BUTTON BATTERY**

(30) Priority: 26.02.2024 JP 2024026392; 26.02.2024 JP 2024026881
(71) Applicant: Seiko Instruments Inc., Chiba-shi, Chiba 261-8507 (JP)
(72) Inventor: YOSHIDA Ryuji, Chiba-shi, Chiba 261-8507 (JP)
(74) Representative: Lewis Silkin LLP
(86) International application number: PCT/JP2025/003011
(87) International publication number: WO 2025/182431

(57) **Abstract**

A negative electrode can (40) includes a top portion (42) and a negative-electrode-can peripheral wall portion (44), and is inserted into a positive electrode can (20). An inner cylindrical portion (45) of the negative-electrode-can peripheral wall portion (44) includes a first curved portion (51) extending in a curved manner downward from an outer peripheral edge of the top portion (42), a second curved portion (52) extending in a curved manner outward in a radial direction from a lower edge of the first curved portion (51), and a third curved portion (53) extending in a curved manner downward from an outer peripheral edge of the second curved portion (52). A radius of curvature of an outer surface (52a) of the second curved portion (52) in a longitudinal cross section is larger than a radius of curvature of an inner surface (51a) of the first curved portion (51) in the longitudinal cross section and a radius of curvature of an inner surface (53a) of the third curved portion (53) in the longitudinal cross section. In the longitudinal cross section, an angle θ formed between a common tangent line (L) of the inner surface (51a) of the first curved portion (51) and the inner surface (53a) of the third curved portion (53) and an axial direction is 40° or more and less than 60°.

## Description

### TECHNICAL FIELD

The present invention relates to a negative electrode can for an alkaline primary button battery and an alkaline primary button battery.

Priority is claimed on Japanese Patent Application No. 2024-026881 filed on February 26, 2024, and Japanese Patent Application No. 2024-026392 filed on February 26, 2024, the contents of which are incorporated herein by reference.

### BACKGROUND ART

As a container for an alkaline primary button battery, there is a container sealed by crimping opening portions of a pair of metal cans in a state in which a gasket is sandwiched between the opening portions. In an alkaline primary button battery including the above-described container, technology for improving leakage resistance has been developed in order to enhance reliability. For example, an electrochemical cell disclosed in Patent Document 1 has a configuration in which a negative electrode can is formed into a two-step cylindrical shape whose inner diameter decreases toward a lid portion, a first inner curved surface of a first cylindrical portion closer to the lid portion bulges outward at a first vertex, a second inner curved surface of a second cylindrical portion farther from the lid portion bulges outward at a second vertex, and an angle between a straight line connecting the first vertex and the second vertex and a bottom portion of a positive electrode can is 15° or more and 45° or less. This is said to make the negative electrode can less likely to be deformed when the positive electrode can is crimped to a peripheral wall of the negative electrode can.

In addition, in an alkaline primary button battery including the above-described container, there is a battery in which a terminal is attached to the metal cans. For example, a button battery disclosed in Patent Document 2 includes a positive electrode can and a negative electrode can that have a flat cylindrical shape, a gasket that insulatingly seals the positive electrode can and the negative electrode can, and a positive electrode terminal and a negative electrode terminal that are fixed to bottom surfaces of the positive electrode can and the negative electrode can.

### Citation List

### Patent Documents

Patent Document 1: Japanese Unexamined Patent Application, First Publication No. 2014-157771
Patent Document 2: PCT International Publication No. WO2022/196358

### SUMMARY OF INVENTION

### Technical Problem

Meanwhile, with miniaturization of electronic devices in which the alkaline primary button battery is installed, miniaturization is required for the battery itself, and an increase in battery capacity is also demanded. By increasing an area of a flat top portion of the negative electrode can, an internal volume of the container can be increased, thereby increasing the battery capacity. However, when the area of the top portion is increased, a peripheral wall portion of the negative electrode can becomes more steeply inclined with respect to the bottom portion of the positive electrode can, and thus the negative electrode can may be deformed when the positive electrode can is crimped.

Accordingly, the present invention provides a negative electrode can for an alkaline primary button battery, and an alkaline primary button battery, both of which can increase battery capacity while ensuring leakage resistance.

### Solution to Problem

A negative electrode can for an alkaline primary button battery according to a first aspect of the present invention is formed in a capped cylindrical shape having a central axis line and is to be inserted into a positive electrode can, the negative electrode can including a top portion that extends in a direction orthogonal to an axial direction and a negative-electrode-can peripheral wall portion that extends from an outer peripheral edge of the top portion toward a first side in the axial direction, in which the negative-electrode-can peripheral wall portion includes an inner cylindrical portion extending from the outer peripheral edge of the top portion toward an opening edge of the negative electrode can, a folded-back portion folded back outward in a radial direction from an edge of the inner cylindrical portion on the first side in the axial direction, and an outer cylindrical portion extending toward a second side in the axial direction from a radially outer end portion of the folded-back portion, the inner cylindrical portion includes a first curved portion extending in a curved manner from the outer peripheral edge of the top portion toward the first side in the axial direction, a second curved portion extending in a curved manner outward in a radial direction from an edge of the first curved portion on the first side in the axial direction, and a third curved portion extending in a curved manner from an outer peripheral edge of the second curved portion toward the first side in the axial direction, a radius of curvature of an outer surface of the second curved portion in a longitudinal cross section including the central axis line is larger than a radius of curvature of an inner surface of the first curved portion in the longitudinal cross section and a radius of curvature of an inner surface of the third curved portion in the longitudinal cross section, and an angle formed between a common tangent line of the inner surface of the first curved portion and the inner surface of the third curved portion in the longitudinal cross section and the axial direction is 40° or more and less than 60°.

Here, when the angle formed between the above-described common tangent line and the axial direction in the longitudinal cross section is small, a portion of the inner cylindrical portion from the first curved portion to the third curved portion tends to stand in the axial direction, and when an opening edge of the positive electrode can is constricted inward and crimped, a force pressing the negative electrode can toward a bottom portion side of the positive electrode can is insufficient, which may result in insufficient sealing. On the other hand, when the angle formed between the above-described common tangent line and the axial direction in the longitudinal cross section is large, a volume of the negative electrode can decreases as a ratio of an outer diameter of the top portion to an outer diameter of the entire negative electrode can decreases, and thus the battery capacity also decreases.

According to the first aspect, since the angle formed between the above-described common tangent line and the axial direction in the longitudinal cross section is 40° or more and less than 60°, it is possible to increase the battery capacity while strongly pressing the negative electrode can toward the bottom portion side of the positive electrode can when the positive electrode can is crimped to ensure sealing.

Moreover, since the radius of curvature of the outer surface of the second curved portion in the longitudinal cross section is larger than the radius of curvature of the inner surface of the first curved portion and the radius of curvature of the inner surface of the third curved portion, it is possible to set the above-described angle large while suppressing occurrence of stress concentration in the first curved portion and the third curved portion when the opening edge of the positive electrode can is crimped while pressing the negative electrode can toward the bottom portion side of the positive electrode can.

Furthermore, since the radius of curvature of the outer surface of the second curved portion in the longitudinal cross section is larger than the radius of curvature of the inner surface of the first curved portion and the radius of curvature of the inner surface of the third curved portion, force when crimping the opening edge of the positive electrode can is easily transmitted linearly from the third curved portion toward the first curved portion. Therefore, it is possible to strengthen the force for crimping the positive electrode can and ensure sealing.

Accordingly, it is possible to provide a negative electrode can for an alkaline primary button battery capable of increasing battery capacity while ensuring leakage resistance.

As a negative electrode can for an alkaline primary button battery according to a second aspect of the present invention, in the negative electrode can for an alkaline primary button battery according to the first aspect described above, an end edge of the third curved portion on the first side in the axial direction may be located on the first side in the axial direction with respect to an end edge of the outer cylindrical portion on the second side in the axial direction.

According to the second aspect, since at least a part of the third curved portion is located inside the outer cylindrical portion, a strong reaction force can be applied from the third curved portion through the outer cylindrical portion to a peripheral wall portion of the positive electrode can whose opening edge is constricted. Therefore, reliable sealing can be achieved to ensure leakage resistance.

As a negative electrode can for an alkaline primary button battery according to a third aspect of the present invention, in the negative electrode can for an alkaline primary button battery according to the first aspect or the second aspect described above, an axial-direction dimension of the outer cylindrical portion may be smaller than a radial-direction thickness of the folded-back portion in the longitudinal cross section.

According to the third aspect, in a portion of the negative-electrode-can peripheral wall portion having a double structure formed by the inner cylindrical portion and the outer cylindrical portion, a ratio of the radial-direction thickness to the axial-direction dimension is large, so that durability against force in the radial direction is increased. Therefore, it becomes possible to strongly crimp the positive electrode can, and reliable sealing is realized to ensure that leakage resistance can be secured.

An alkaline primary button battery according to a fourth aspect of the present invention includes: the negative electrode can for an alkaline primary button battery according to any one of the first aspect to the third aspect described above; a positive electrode can formed in a bottomed cylindrical shape and including a bottom portion and a positive-electrode-can peripheral wall portion extending from an outer peripheral edge of the bottom portion toward the second side in the axial direction, the above-described negative electrode can for an alkaline primary button battery being inserted into the positive electrode can; and a gasket disposed between the positive-electrode-can peripheral wall portion and the negative-electrode-can peripheral wall portion, and pressed against an outer peripheral surface of the negative electrode can by constricting an opening edge of the positive electrode can.

According to the fourth aspect, it is possible to increase a distance between the folded-back portion located at the opening edge of the negative electrode can and the bottom portion of the positive electrode can without increasing a distance between the top portion of the negative electrode can and the bottom portion of the positive electrode can. Therefore, it is possible to provide a positive electrode disposed inside the positive electrode can thickly along the bottom portion, making it possible to increase battery capacity and improve conductivity by improving an impregnation property of an electrolytic solution.

As an alkaline primary button battery according to a fifth aspect of the present invention, in the alkaline primary button battery according to the fourth aspect described above, the gasket may include an annular base portion extending along the opening edge of the negative electrode can, an outer wall portion extending from the base portion into a space between the positive-electrode-can peripheral wall portion and the negative-electrode-can peripheral wall portion, and an inner circumferential portion extending inward in the radial direction from the base portion, and an inner end edge of the inner circumferential portion in the radial direction may overlap the top portion in the axial direction.

According to the fifth aspect, since the opening edge of the negative electrode can is reliably covered by the gasket from the bottom portion side of the positive electrode can to the inward side in the radial direction, it is possible to reliably protect the negative electrode can during sealing.

An alkaline primary button battery according to a sixth aspect of the present invention includes: a negative electrode can formed in a capped cylindrical shape having a central axis line, having a top portion spreading in a direction orthogonal to an axial direction and a negative-electrode-can peripheral wall portion extending from an outer peripheral edge of the top portion toward a first side in the axial direction; a positive electrode can formed in a bottomed cylindrical shape, having a bottom portion and a positive-electrode-can peripheral wall portion extending from an outer peripheral edge of the bottom portion toward a second side in the axial direction, the negative electrode can being inserted into the positive electrode can; a gasket disposed between the positive-electrode-can peripheral wall portion and the negative-electrode-can peripheral wall portion, and pressed against an outer peripheral surface of the negative electrode can by constricting an opening edge of the positive electrode can; and a negative electrode terminal joined to the top portion, in which the negative-electrode-can peripheral wall portion includes an inner cylindrical portion extending from the outer peripheral edge of the top portion toward an opening edge of the negative electrode can, a folded-back portion folded back outward in a radial direction from an edge of the inner cylindrical portion on the first side in the axial direction, and an outer cylindrical portion extending toward a second side in the axial direction from a radially outer end portion of the folded-back portion, the inner cylindrical portion includes a first curved portion extending in a curved manner from the outer peripheral edge of the top portion toward the first side in the axial direction, a second curved portion extending in a curved manner outward in the radial direction from an edge of the first curved portion on the first side in the axial direction, and a third curved portion extending in a curved manner from an outer peripheral edge of the second curved portion toward the first side in the axial direction, a radius of curvature of an outer surface of the second curved portion in a longitudinal cross section including the central axis line is larger than a radius of curvature of an inner surface of the first curved portion in the longitudinal cross section and a radius of curvature of an inner surface of the third curved portion in the longitudinal cross section, and an angle formed between a common tangent line of the inner surface of the first curved portion and the inner surface of the third curved portion in the longitudinal cross section and the axial direction is 40° or more and 50° or less.

Here, when the angle formed between the above-described common tangent line and the axial direction in the longitudinal cross section is small, a portion of the inner cylindrical portion from the first curved portion to the third curved portion tends to stand in the axial direction, and when an opening edge of the positive electrode can is constricted inward and crimped, a force pressing the negative electrode can toward a bottom portion side of the positive electrode can is insufficient, which may result in insufficient sealing. On the other hand, when the angle formed between the above-described common tangent line and the axial direction in the longitudinal cross section is large, an area of the top portion decreases as a ratio of an outer diameter of the top portion to an outer diameter of the entire negative electrode can decreases, and a sufficient joint allowance with the negative electrode terminal at the top portion of the negative electrode can may not be reliably ensured.

According to the sixth aspect, since the angle formed between the above-described common tangent line and the axial direction in the longitudinal cross section is 40° or more and 50° or less, it is possible to secure a contact area with the negative electrode terminal by suppressing a decrease in the outer diameter of the top portion of the negative electrode can while strongly pressing the negative electrode can toward the bottom portion side of the positive electrode can to ensure sealing when the positive electrode can is crimped, and to join the negative electrode terminal to the top portion so as not to be displaced even when deformation such as swelling and dent occurs in the top portion.

Moreover, since the radius of curvature of the outer surface of the second curved portion in the longitudinal cross section is larger than the radius of curvature of the inner surface of the first curved portion and the radius of curvature of the inner surface of the third curved portion, it is possible to set the above-described angle large while suppressing occurrence of stress concentration in the first curved portion and the third curved portion when the opening edge of the positive electrode can is crimped while pressing the negative electrode can toward the bottom portion side of the positive electrode can.

Furthermore, since the radius of curvature of the outer surface of the second curved portion in the longitudinal cross section is larger than the radius of curvature of the inner surface of the first curved portion and the radius of curvature of the inner surface of the third curved portion, force when crimping the opening edge of the positive electrode can is easily transmitted linearly from the third curved portion toward the first curved portion. Therefore, it is possible to strengthen the force for crimping the positive electrode can and ensure sealing.

Accordingly, it is possible to improve dimensional accuracy of a battery with a terminal while ensuring leakage resistance.

In addition, since the decrease in the outer diameter of the top portion of the negative electrode can is suppressed, a joint portion between the top portion and the negative electrode terminal can be set further to the outer peripheral side. As a result, even when a load is applied to the negative electrode terminal, the negative electrode terminal is less likely to peel off from the negative electrode can. Therefore, durability of the battery with a terminal can be improved.

### Advantageous Effects of Invention

According to the present invention, it is possible to provide a negative electrode can for an alkaline primary button battery, and an alkaline primary button battery, both of which can increase battery capacity while ensuring leakage resistance.

### BRIEF DESCRIPTION OF DRAWINGS

[FIG. 1] A perspective view of a battery according to an embodiment.
[FIG. 2] A side view of the battery according to the embodiment.
[FIG. 3] A longitudinal cross-sectional view of the battery according to the embodiment.
[FIG. 4] An enlarged view showing a portion IV in FIG. 3.

### DESCRIPTION OF EMBODIMENTS

Hereinafter, embodiments of the present invention will be described with reference to the drawings. In the following description, components having the same or similar functions are denoted by the same reference numerals. Duplicate descriptions of such components may be omitted.

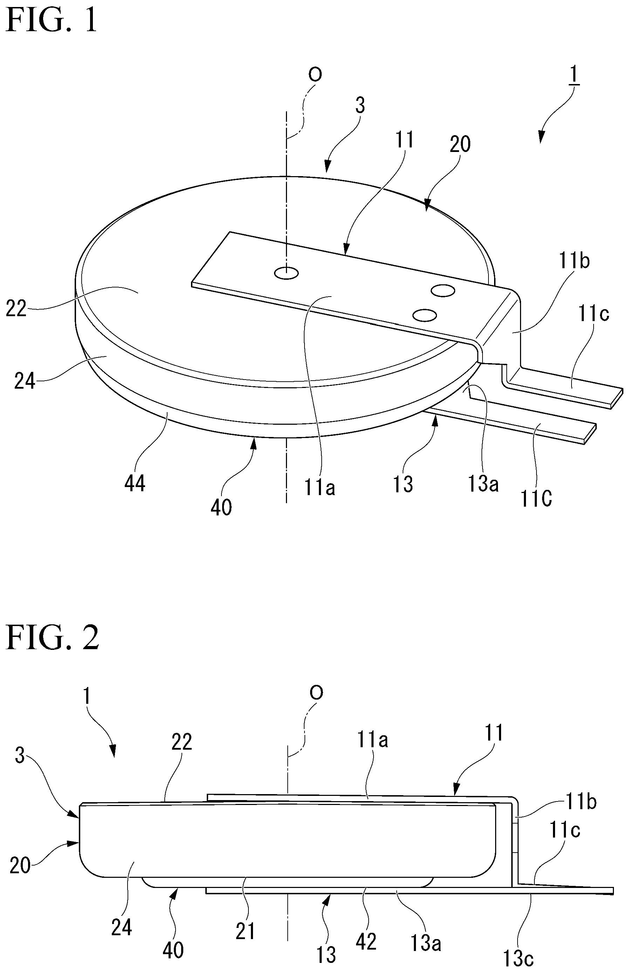

FIG. 1 is a perspective view of a battery according to an embodiment. FIG. 2 is a side view of the battery according to the embodiment.

As shown in FIGS. 1 and 2, a battery 1 according to the embodiment is an alkaline primary button battery. The battery 1 includes an exterior body 3 having a circular shape in a plan view, and a positive electrode terminal 11 and a negative electrode terminal 13 attached to the exterior body 3.

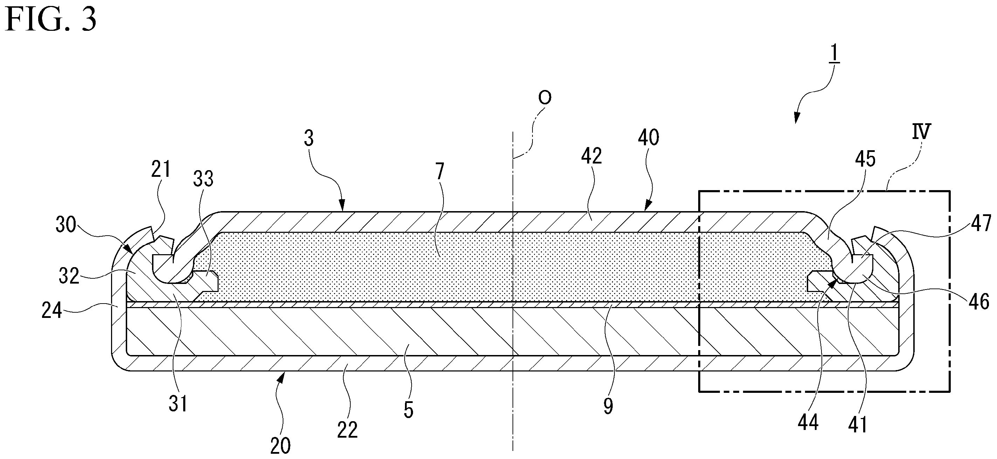

FIG. 3 is a longitudinal cross-sectional view of the battery according to the embodiment.

As shown in FIG. 3, the exterior body 3 includes a positive electrode can 20 and a negative electrode can 40 assembled to the positive electrode can 20 through an insulating gasket 30.

The exterior body 3 includes the positive electrode can 20 formed in a bottomed cylindrical shape, an annular gasket 30 fitted inside the positive electrode can 20, and the negative electrode can 40 formed in a capped cylindrical shape, which is inserted into an opening portion of the positive electrode can 20 and assembled to the positive electrode can 20 through the gasket 30. The positive electrode can 20 and the negative electrode can 40 are arranged to be spaced apart from each other with the gasket 30 interposed therebetween. The exterior body 3 is sealed by constricting an opening edge 21 of the positive electrode can 20 through a crimping process to press the gasket 30 against the outer peripheral surface of the negative electrode can 40. The positive electrode can 20, the negative electrode can 40, and the gasket 30 are arranged such that central axis lines thereof are located on a common axis. Hereinafter, the common axis is referred to as an axis line O; a direction along the axis line O is referred to as an axial direction; a direction orthogonal to the axis line O and extending radially from the axis line O is referred to as a radial direction; and a direction circulating around the axis line O is referred to as a circumferential direction. In addition, in the axial direction, an opening direction of the positive electrode can 20 is defined as "upward" (second side), and a direction opposite to "upward" is defined as "downward" (first side). Furthermore, a cross section parallel to the axis line O and including the axis line O is referred to as "longitudinal cross section".

The positive electrode can 20 is formed in a cylindrical shape opening upward. The positive electrode can 20 includes a disk-shaped bottom portion 22 extending along a direction orthogonal to the axial direction, and a positive-electrode-can peripheral wall portion 24 extending upward from an outer peripheral edge of the bottom portion 22 toward the opening edge 21 of the positive electrode can 20 over the entire circumference. The positive electrode can 20 is formed by subjecting a plate material that is a nickel-plated stainless steel plate to drawing or the like.

The negative electrode can 40 is formed in a cylindrical shape opening downward. An opening edge 41 of the negative electrode can 40 faces an upper surface of the bottom portion 22 of the positive electrode can 20 through the gasket 30. The opening edge 41 has a gap in the axial direction with respect to the bottom portion 22 of the positive electrode can 20. The negative electrode can 40 includes a disk-shaped top portion 42 extending along the direction orthogonal to the axial direction, and a negative-electrode-can peripheral wall portion 44 extending downward from an outer peripheral edge of the top portion 42 over the entire circumference. The negative electrode can 40 is formed by subjecting a clad material that has a three-layer structure including a nickel outer surface layer, a stainless steel layer, and a copper current collector layer to drawing or the like.

An outer peripheral surface of the negative-electrode-can peripheral wall portion 44 extends so as to expand in diameter from the outer peripheral edge of the top portion 42 toward the opening edge 41 of the negative electrode can 40. The negative-electrode-can peripheral wall portion 44 includes an inner cylindrical portion 45 extending from the outer peripheral edge of the top portion 42 toward the opening edge 21 of the negative electrode can 40, a folded-back portion 46 folded back outward in the radial direction from a lower edge of the inner cylindrical portion 45, and an outer cylindrical portion 47 extending upward from a radially outer end portion of the folded-back portion 46.

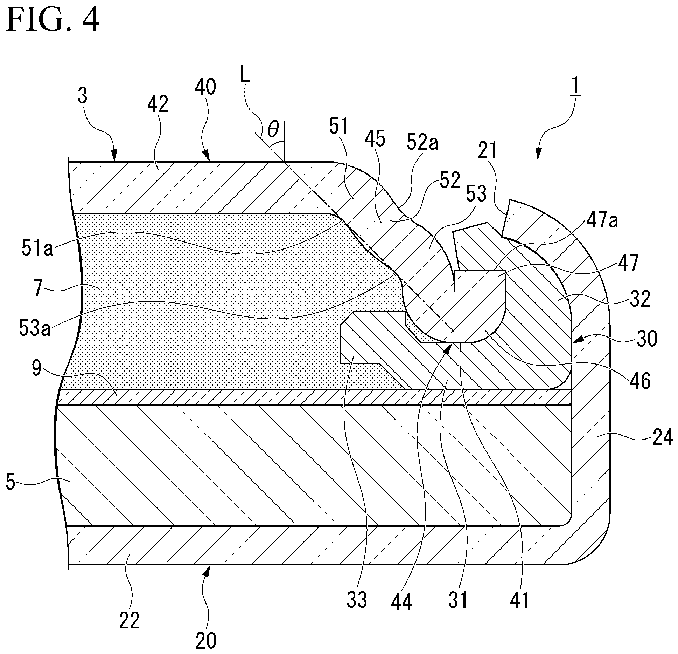

FIG. 4 is an enlarged view showing a portion IV in FIG. 3.

As shown in FIG. 4, the inner cylindrical portion 45 includes a first curved portion 51, a second curved portion 52, and a third curved portion 53. The first curved portion 51 is continuous with the outer peripheral edge of the top portion 42. The first curved portion 51 extends in curved manner downward from the outer peripheral edge of the top portion 42. The first curved portion 51 is curved by less than 90° in the longitudinal cross section. The second curved portion 52 extends in a curved manner outward in the radial direction from a lower edge of the first curved portion 51. The second curved portion 52 is curved by less than 90° in the longitudinal cross section. The third curved portion 53 extends in a curved manner downward from an outer peripheral edge of the second curved portion 52. A lower edge of the third curved portion 53 constitutes the lower edge of the inner cylindrical portion 45. The third curved portion 53 is curved by less than 90° in the longitudinal cross section. In the following description regarding the shape of the inner cylindrical portion 45, a shape in the longitudinal cross section is described unless otherwise specified.

An inner surface 51a of the first curved portion 51 constitutes the entire concavely curved portion. The entire inner surface 51a of the first curved portion 51 is curved with a first radius of curvature. The entire outer surface of the first curved portion 51 is curved convexly. An outer surface 52a of the second curved portion 52 constitutes the entire concavely curved portion. The entire outer surface 52a of the second curved portion 52 is curved with a second radius of curvature. The entire inner surface of the second curved portion 52 is curved convexly. An inner surface 53a of the third curved portion 53 constitutes the entire concavely curved portion. The entire inner surface 53a of the third curved portion 53 is curved with a third radius of curvature. The entire outer surface of the third curved portion 53 is curved convexly. For example, the third radius of curvature is equal to the first radius of curvature. The second radius of curvature is larger than the first radius of curvature and the third radius of curvature.

A boundary between the first curved portion 51 and the second curved portion 52 is defined by a straight line passing through an end portion of the concave inner surface 51a of the first curved portion 51 on the second curved portion 52 side and an end portion of the concave outer surface 52a of the second curved portion 52 on the first curved portion 51 side. A boundary between the second curved portion 52 and the third curved portion 53 is defined by a straight line passing through an end portion of the concave outer surface 52a of the second curved portion 52 on the third curved portion 53 side and an end portion of the concave inner surface 53a of the third curved portion 53 on the second curved portion 52 side.

The inner cylindrical portion 45 is formed so as to satisfy the following conditions. An angle θ formed between a common tangent line L of the inner surface 51a of the first curved portion 51 and the inner surface 53a of the third curved portion 53 in the longitudinal cross section and the axial direction is 40° or more and less than 60°. In other words, when the top portion 42 is parallel to the direction orthogonal to the axial direction, an angle formed between the common tangent line L and the top portion 42 is more than 30° and 50° or less. The angle θ formed between the common tangent line L and the axial direction is desirably 43° or more and 57° or less. In the example shown in the drawing, the angle θ formed between the common tangent line L and the axial direction is 45°.

The folded-back portion 46 is provided at the opening edge 41 of the negative electrode can 40. The folded-back portion 46 extends from the lower edge of the inner cylindrical portion 45 while being curved outward in the radial direction by 180°. A lower surface of the folded-back portion 46 extends in a convex curved surface shape protruding downward in the longitudinal cross section.

The outer cylindrical portion 47 extends upward from the folded-back portion 46 over the entire circumference. The outer cylindrical portion 47 extends in the axial direction with a constant inner diameter and a constant outer diameter so as to surround the inner cylindrical portion 45. An inner peripheral surface of the outer cylindrical portion 47 may be in contact with the outer peripheral surface of a lower end portion of the inner cylindrical portion 45, or may be slightly spaced apart from the outer peripheral surface of the inner cylindrical portion 45. An upper edge 47a of the outer cylindrical portion 47 is located above the lower edge of the third curved portion 53.

An axial-direction dimension of the outer cylindrical portion 47 is smaller than a radial-direction thickness of the folded-back portion 46 in the longitudinal cross section. Furthermore, an axial-direction dimension from the opening edge 21 of the negative electrode can 40 to the upper edge 47a of the outer cylindrical portion 47 is smaller than the radial-direction thickness of the folded-back portion 46 in the longitudinal cross section.

The gasket 30 is disposed between the positive electrode can 20 and the negative electrode can 40. The gasket 30 includes a base portion 31 extending along the opening edge 21 of the negative electrode can 40 over the entire circumference in the circumferential direction, an outer wall portion 32 extending from the base portion 31 into a space between the positive-electrode-can peripheral wall portion 24 and the negative-electrode-can peripheral wall portion 44, and an inner circumferential portion 33 extending inward in the radial direction from the base portion 31. For example, the gasket 30 is made of nylon.

The base portion 31 is located below the folded-back portion 46 of the negative electrode can 40. The base portion 31 is disposed between the folded-back portion 46 of the negative electrode can 40 and the bottom portion 22 of the positive electrode can 20. The base portion 31 is in contact with the folded-back portion 46 and is not in contact with the bottom portion 22. The outer wall portion 32 is formed in a cylindrical shape. The outer wall portion 32 is in close contact with the positive-electrode-can peripheral wall portion 24 and the negative-electrode-can peripheral wall portion 44. The outer wall portion 32 is in contact with the opening edge 21 of the positive electrode can 20. The outer wall portion 32 is pressed against the outer peripheral surface of the outer cylindrical portion 47 of the negative electrode can 40 and the upper end surface thereof by the positive-electrode-can peripheral wall portion 24 constricted by the crimping process. The outer wall portion 32 is not in contact with the inner cylindrical portion 45 of the negative electrode can 40. The inner circumferential portion 33 protrudes inward in the radial direction beyond the folded-back portion 46. The inner circumferential portion 33 extends over the entire circumference in the circumferential direction. A radially inner edge of the inner circumferential portion 33 is positioned radially inward of the outer peripheral edge of the top portion 42 of the negative electrode can 40, and overlaps with the top portion 42 in the axial direction. An injection-molding gate may be formed in the inner circumferential portion 33.

As shown in FIGS. 1 and 2, the positive electrode terminal 11 and the negative electrode terminal 13 are arranged so as to sandwich the exterior body 3 from both sides in the axial direction. The positive electrode terminal 11 and the negative electrode terminal 13 are formed of a highly conductive metal plate such as stainless steel.

The positive electrode terminal 11 is joined to the positive electrode can 20. The positive electrode terminal 11 includes a strip-shaped positive electrode connection portion 11a disposed along an outer surface of the bottom portion 22 of the positive electrode can 20, an intermediate portion 11b extending substantially at a right angle with respect to the positive electrode connection portion 11a, and a flat board connection portion 11c extending substantially at a right angle with respect to the intermediate portion 11b. The positive electrode connection portion 11a is mechanically and electrically connected to the bottom portion 22 of the positive electrode can 20 by laser welding. The board connection portion 11 c is a portion to be soldered to a connection surface such as a terminal pad, formed on a board on which the battery 1 is mounted.

The negative electrode terminal 13 is joined to the negative electrode can 40. The negative electrode terminal 13 includes a strip-shaped negative electrode connection portion 13a disposed along an outer surface of the top portion 42 of the negative electrode can 40, and a board connection portion 13c extending from one end of the negative electrode connection portion 13a. The negative electrode connection portion 13a is mechanically and electrically connected to the top portion 42 of the negative electrode can 40 by laser welding. For example, the negative electrode connection portion 13a is joined to the top portion 42 at a plurality of locations. The negative electrode connection portion 13a may be joined to the top portion 42 at mutually different positions in the radial direction. The negative electrode connection portion 13a may be joined to the top portion 42 at mutually different positions in the circumferential direction. The board connection portion 13c is formed as an extension of the plate-shaped negative electrode connection portion 13a so as to be flush therewith. The board connection portion 13c is a portion to be soldered to a connection surface such as a terminal pad formed on a board on which the battery 1 is mounted. The negative electrode terminal 13 is joined to the negative electrode can 40 such that the board connection portion 13c is adjacent to the board connection portion 11c of the positive electrode terminal 11. In addition, the negative electrode terminal 13 is plate-shaped as a whole and extends along a bottom surface of the negative electrode can 40.

As shown in FIG. 3, the battery 1 includes a positive electrode mixture 5, a negative electrode mixture 7, and a separator 9 disposed inside the exterior body 3. The positive electrode mixture 5 and the negative electrode mixture 7 are arranged between the positive electrode can 20 and the negative electrode can 40 to face each other through the separator 9. The positive electrode mixture 5 is disposed along the bottom portion 22 of the positive electrode can 20. The positive electrode mixture 5 is disposed between the opening edge 41 of the negative electrode can 40 and the bottom portion 22 of the positive electrode can 20. The positive electrode mixture 5 is formed in a columnar shape corresponding to an internal shape of the positive electrode can 20, and is disposed substantially without a gap with respect to the bottom portion 22 of the positive electrode can 20 and the positive-electrode-can peripheral wall portion 24. The positive electrode mixture 5 is electrically connected to the inner surface of the positive electrode can 20. The separator 9 is disposed so as to cover the entire upper surface of the positive electrode mixture 5. The separator 9 is sandwiched between the gasket 30 and the positive electrode mixture 5. The negative electrode mixture 7 is disposed inside the negative electrode can 40. The negative electrode mixture 7 is placed on the positive electrode mixture 5 through the separator 9. The negative electrode mixture 7 is disposed between the separator 9 and the top portion 42 of the negative electrode can 40. The negative electrode mixture 7 is disposed substantially without a gap with respect to the top portion 42 and the negative-electrode-can peripheral wall portion 44 of the negative electrode can 40. The negative electrode mixture 7 is electrically connected to the inner surface of the negative electrode can 40.

The positive electrode mixture 5 is molded into a pellet shape. The positive electrode mixture 5 contains a positive electrode active material, a conductive agent, an electrolytic solution, a binder, an additive, and the like. The positive electrode active material is not particularly limited as long as it is usable as a positive electrode active material when zinc or a zinc alloy is used as a negative electrode active material. For example, the positive electrode active material may be silver oxide or manganese dioxide powder or a mixture thereof. Alternatively, the positive electrode active material may be nickel oxyhydroxide alone, or nickel oxyhydroxide or the like in which cobalt or the like is in solid solution. As the conductive auxiliary agent, graphite or the like can be used. As the additive, a hydrogen storage alloy (LaNi5) or the like can be used.

The negative electrode mixture 7 is gel-like. The negative electrode mixture 7 contains, for example, a negative electrode active material, a conductivity stabilizer, a gelling agent, an electrolytic solution, a viscoelasticity adjusting material, an additive (a thickener or a resin powder), and the like. As the negative electrode active material, for example, zinc powder or zinc alloy powder can be used. As the conductivity stabilizer, zinc oxide (ZnO) or the like can be used. In addition, as the gelling agent, carboxymethyl cellulose, polyacrylic acid, or a mixture of carboxymethyl cellulose and polyacrylic acid is preferable. By using carboxymethyl cellulose or polyacrylic acid, wettability and electrolyte retention of the negative electrode mixture 7 with respect to the electrolyte can be improved.

As the electrolytic solution, a potassium hydroxide aqueous solution, a sodium hydroxide aqueous solution, or a mixed solution thereof can be used.

The viscoelasticity adjusting material is blended so that the negative electrode mixture 7 has viscoelasticity which provides favorable handling properties, and to improve productivity. As the viscoelasticity adjusting material, a resin powder that does not react with the electrolytic solution which is strongly alkaline is used. Here, a state of not chemically reacting with the electrolytic solution and not absorbing the electrolytic solution is referred to as a state of not reacting with the electrolytic solution.

As the separator 9, an insulating film having large ion permeability and having mechanical strength is used. As the separator 9, separators conventionally used for the separator 9 of the battery 1 can be applied without any limitation, and examples thereof include glass such as alkali glass, borosilicate glass, quartz glass, and lead glass; and nonwoven fabrics made of resins such as polyphenylene sulfide (PPS), polyether ether ketone (PEEK), polyethylene terephthalate (PET), polyamide imide (PAI), polyamide, and polyimide (PI).

As described above, the negative-electrode-can peripheral wall portion 44 of the battery 1 according to the present embodiment includes the inner cylindrical portion 45 extending from the outer peripheral edge of the top portion 42 toward the opening edge 41 of the negative electrode can 40, the folded-back portion 46 folded back outward in the radial direction from the lower edge of the inner cylindrical portion 45, and the outer cylindrical portion 47 extending upward from the radially outer end portion of the folded-back portion 46. The inner cylindrical portion 45 includes a first curved portion 51 extending curvedly downward from the outer peripheral edge of the top portion 42, a second curved portion 52 extending curvedly outward in the radial direction from the lower edge of the first curved portion 51, and a third curved portion 53 extending curvedly downward from the outer peripheral edge of the second curved portion 52.

Here, when the angle θ formed between the common tangent line L of the inner surface 51a of the first curved portion 51 and the inner surface 53a of the third curved portion 53 in the longitudinal cross section and the axial direction is small, a portion of the inner cylindrical portion 45 from the first curved portion 51 to the third curved portion 53 tends to stand in the axial direction, and when the opening edge 21 of the positive electrode can 20 is constricted inward and crimped, a force pressing the negative electrode can 40 toward the bottom portion 22 side of the positive electrode can 20 is insufficient, which may result in insufficient sealing. On the other hand, when the angle θ formed between the above-described common tangent line L and the axial direction in the longitudinal cross section is large, the volume of the negative electrode can decreases as a ratio of an outer diameter of the top portion to an outer diameter of the entire negative electrode can decreases, and the battery capacity also decreases.

According to the present embodiment, since the angle θ formed between the common tangent line L and the axial direction in the longitudinal cross section is 40° or more and less than 60°, it is possible to increase the battery capacity while strongly pressing the negative electrode can 40 toward the bottom portion 22 side of the positive electrode can 20 when the positive electrode can 20 is crimped to ensure sealing.

Moreover, since the radius of curvature of the outer surface 52a of the second curved portion 52 in the longitudinal cross section is larger than the radius of curvature of the inner surface 51a of the first curved portion 51 and the radius of curvature of the inner surface 53a of the third curved portion 53, it is possible to set the above-described angle θ large while suppressing occurrence of stress concentration in the first curved portion 51 and the third curved portion 53 when the opening edge 21 of the positive electrode can 20 is crimped while pressing the negative electrode can 40 toward the bottom portion 22 side of the positive electrode can 20.

Furthermore, since the radius of curvature of the outer surface 52a of the second curved portion 52 in the longitudinal cross section is larger than the radius of curvature of the inner surface 51a of the first curved portion 51 and the radius of curvature of the inner surface 53a of the third curved portion 53, force when crimping the opening edge 21 of the positive electrode can 20 is easily transmitted linearly from the third curved portion 53 toward the first curved portion 51. Therefore, it is possible to strengthen the force for crimping the positive electrode can 20 and ensure sealing. Accordingly, it is possible to provide the negative electrode can 40 for an alkaline primary button battery capable of increasing battery capacity while ensuring leakage resistance.

The lower edge of the third curved portion 53 is positioned below the upper edge of the outer cylindrical portion 47. According to the configuration, since at least a part of the third curved portion 53 is located inside the outer cylindrical portion 47, a strong reaction force can be applied from the third curved portion 53 through the outer cylindrical portion 47 to the positive-electrode-can peripheral wall portion 24 whose opening edge 21 is constricted. Therefore, reliable sealing can be achieved to ensure leakage resistance.

An axial-direction dimension of the outer cylindrical portion 47 is smaller than a radial-direction thickness of the folded-back portion 46 in the longitudinal cross section. According to the configuration, in a portion of the negative-electrode-can peripheral wall portion 44 having a double structure formed by the inner cylindrical portion 45 and the outer cylindrical portion 47, a ratio of the radial-direction thickness to the axial-direction dimension is large, so that durability against force in the radial direction is increased. Therefore, it becomes possible to strongly crimp the positive electrode can 20, and reliable sealing is realized to ensure that leakage resistance can secured.

The gasket 30 includes the annular base portion 31 extending along the opening edge 41 of the negative electrode can 40, the outer wall portion 32 extending from the base portion 31 into a space between the positive-electrode-can peripheral wall portion 24 and the negative-electrode-can peripheral wall portion 44, and the inner circumferential portion 33 extending inward in the radial direction from the base portion 31. The inner edge of the inner circumferential portion 33 in the radial direction overlaps the top portion 42 in the axial direction. According to the configuration, since the opening edge 41 of the negative electrode can 40 is reliably covered by the gasket 30 from the bottom portion 22 side of the positive electrode can 20 to the inward side in the radial direction, it is possible to reliably protect the negative electrode can 40 during sealing.

In an alkaline primary button battery, deformation is likely to occur in a metal can due to factors such as a filling ratio of an active material and an electrolyte, the material of the metal can, stress during crimping, and the like. When the metal can is deformed, displacement is likely to occur in a terminal joined to the metal can, causing a problem that dimensional accuracy of a battery with a terminal is lowered.

Here, when the angle θ formed between the above-described common tangent line L and the axial direction in the longitudinal cross section of the battery 1 is large, an area of the top portion 42 decreases as a ratio of an outer diameter of the top portion 42 to an outer diameter of the entire negative electrode can 40 decreases, and a sufficient joint allowance with the negative electrode terminal 13 at the top portion 42 of the negative electrode can 40 may not be reliably ensured. According to the present embodiment, by setting the angle θ formed between the common tangent line L and the axial direction in the longitudinal cross section to 40° or more and 50° or less, it is possible to secure a contact area with the negative electrode terminal 13 by suppressing a decrease in the outer diameter of the top portion 42 of the negative electrode can 40 while strongly pressing the negative electrode can 40 toward the bottom portion 22 side of the positive electrode can 20 to ensure sealing when the positive electrode can 20 is crimped, and to join the negative electrode terminal 13 to the top portion 42 so as not to be displaced even when deformation such as swelling and dents occurs in the top portion 42.

Moreover, since the radius of curvature of the outer surface 52a of the second curved portion 52 in the longitudinal cross section is larger than the radius of curvature of the inner surface 51a of the first curved portion 51 and the radius of curvature of the inner surface 53a of the third curved portion 53, it is possible to set the above-described angle θ large while suppressing occurrence of stress concentration in the first curved portion 51 and the third curved portion 53 when the opening edge 21 of the positive electrode can 20 is crimped while pressing the negative electrode can 40 toward the bottom portion 22 side of the positive electrode can 20.

Furthermore, since the radius of curvature of the outer surface 52a of the second curved portion 52 in the longitudinal cross section is larger than the radius of curvature of the inner surface 51a of the first curved portion 51 and the radius of curvature of the inner surface 53a of the third curved portion 53, force when crimping the opening edge 21 of the positive electrode can 20 is easily transmitted linearly from the third curved portion 53 toward the first curved portion 51. Therefore, it is possible to strengthen the force for crimping the positive electrode can 20 and ensure sealing.

Accordingly, it is possible to improve dimensional accuracy of a battery with a terminal while ensuring leakage resistance.

In addition, since the decrease in the outer diameter of the top portion 42 of the negative electrode can 40 is suppressed, a joint portion between the top portion 42 and the negative electrode terminal 13 can be set further to the outer peripheral side. Therefore, even when a load is applied to the negative electrode terminal 13, the negative electrode terminal 13 is less likely to peel off from the negative electrode can 40. Accordingly, durability of the battery 1 with a terminal can be improved.

### Examples

A silver oxide button battery having the structure according to the above-described embodiment, an outer diameter of 7.9 mm, and a thickness of 1.65 mm was prototyped and subjected to a test. A positive electrode can of the button battery was made of nickel-plated stainless steel. A negative electrode can was made of a clad material having a three-layer structure consisting of nickel, stainless steel, and copper. A thickness of the positive electrode can was 0.15 mm. A thickness of the negative electrode can was 0.20 mm.

Here, as the negative electrode can of the present example, a negative electrode can in which the above-mentioned angle θ was 60° (Comparative Example), a negative electrode can in which the angle θ was 55° (Example 1), a negative electrode can in which the angle θ was 50° (Example 2), and a negative electrode can in which the angle θ was 45° (Example 3) were used.

As shown in FIG. 3, a positive electrode mixture, a separator, a negative electrode mixture, and an electrolytic solution were accommodated inside the positive electrode can and the negative electrode can, a gasket was attached thereto, and the positive electrode can was crimped and sealed to prototype a battery.

In the production of the button battery, first, as a positive electrode mixture used for a positive electrode 5, a mixture of 92% by mass of silver oxide (Ag2O), 5% by mass of manganese dioxide, 2% by mass of graphite, and 1% by mass of lanthanum nickel (LaNi5) was prepared. An average particle size of the silver oxide was 10 µm, an average particle size of the manganese dioxide was 30 µm, an average particle size of the graphite was 15 µm, and an average particle size of the lanthanum nickel was 35 µm. Here, each average particle size was D50.

Next, the positive electrode mixture composed of the above-described mixed particles was compression-molded into a disk-like pellet shape to produce the positive electrode 5.

In addition, as a negative electrode mixture used for a negative electrode 7, a mixture obtained by mixing zinc powder adjusted in a range of 60% to 68% by mass, 2.5% by mass of zinc oxide powder, 2.5% by mass of carboxymethyl cellulose (CMC) as a gelling agent, and the balance of potassium hydroxide aqueous solution as an electrolytic solution was obtained.

Next, the positive electrode 5 produced by the above-described procedure was placed in the positive electrode can 20, the separator 9 was placed on the positive electrode 5, and the ring-shaped gasket 30 was press-fitted into the positive electrode can 20 so as to be positioned on the separator 9.

Next, the negative electrode mixture was placed on the separator 9, and the negative electrode can 40 was put on the negative electrode mixture through the gasket 30. The opening edge 21 of the positive electrode can 20 was crimped to produce the alkaline primary button battery 1 of the present example.

As the separator 9, a separator composed of a polyethylene film and cellophane was used. In addition, as the gasket 30, a gasket composed of polyamide was used.

For button batteries of Examples 1 to 3 and Comparative Example, obtained by the above-described procedure, discharge capacity was measured with a discharge current of 50 µA and a cutoff voltage of 1.2 V. Here, regarding the discharge capacities obtained in Examples 1 to 3, results of discharge capacity ratios when the discharge capacity in Comparative Example is taken as 1 are shown in Table 1 below. Here, values in Table 1 are average values of n = 6 for each of Examples and Comparative Example.

**[Table 1]**

| | Angle θ | Discharge capacity ratio |
|---|---|---|
| Comparative Example | 60° | 1 |
| Example 1 | 55° | 1.14 |
| Example 2 | 50° | 1.15 |
| Example 3 | 45° | 1.17 |

From the results shown in Table 1, it was found that sufficient discharge capacity was obtained in each of Examples, in which the above-described angle θ was 45° to 55°, compared to Comparative Example in which the angle θ was 60°.

In addition, when the button batteries of Examples 1 to 3 and Comparative Example were stored at 45°C and 93% humidity, and appearance observation was performed after 60 days, no leakage was observed in any of the batteries.

From the above test results, it was found that, regarding the negative-electrode-can peripheral wall portion 44 of the battery 1 according to the present embodiment, when the angle θ formed between the common tangent line L and the axial direction in the longitudinal cross section was 40° or more and less than 60°, the internal volume on the negative electrode can side could be increased, and the battery capacity could be increased while ensuring leakage resistance.

The present invention is not limited to the above-described embodiments described with reference to the drawings, and various modifications can be considered within the technical scope thereof.

For example, in the above-described embodiments, the gasket 30 is in contact with the bottom portion 22 of the positive electrode can 20 through the separator 9 and the positive electrode mixture 5, but for example, the gasket may be in direct contact with the bottom portion of the positive electrode can.

In the above-described embodiments, the entire outer surface of the first curved portion 51 is curved convexly in the longitudinal cross section, but the outer surface of the first curved portion may have a straight portion extending linearly in the longitudinal cross section on the second curved portion side. In addition, in the above-described embodiments, the entire inner surface of the second curved portion 52 is curved convexly in the longitudinal cross section, but the inner surface of the second curved portion may have a straight portion extending linearly in the longitudinal cross section on the first curved portion side. In the above-described embodiments, the entire inner surface of the second curved portion 52 is curved convexly in the longitudinal cross section, but further, the inner surface of the second curved portion may have a straight portion extending linearly in the longitudinal cross section on the third curved portion side. In addition, in the above-described embodiments, the entire outer surface of the third curved portion 53 is curved convexly in the longitudinal cross section, but the outer surface of the third curved portion may have a straight portion extending linearly in the longitudinal cross section on the second curved portion side. Even in these cases, the boundary between the first curved portion and the second curved portion and the boundary between the second curved portion and the third curved portion in the longitudinal cross section are defined in the same manner as in the above-described embodiments.

In the above-described embodiments, the lower edge of the third curved portion 53 coincides with the lower edge of the inner cylindrical portion 45, and the folded-back portion 46 extends from the lower edge of the third curved portion 53; but the third curved portion and the folded-back portion 46 may not be directly connected. For example, the inner cylindrical portion may have a portion extending linearly downward from the lower edge of the third curved portion and connected to the folded-back portion.

Here, without departing from the scope of the present invention, the components in the above-described embodiment may be replaced, as appropriate, with well-known components, and the above-described embodiments and modifications may be combined as appropriate.

### INDUSTRIAL APPLICABILITY

According to the present invention, it is possible to provide a negative electrode can for an alkaline primary button battery, and an alkaline primary button battery, both of which can increase battery capacity while ensuring leakage resistance.

### REFERENCE SIGNS LIST

1 Battery (alkaline primary button battery)
13 Negative electrode terminal
20 Positive electrode can
21 Opening edge of positive electrode can
22 Bottom portion
24 Positive-electrode-can peripheral wall portion
30 Gasket
31 Base portion
32 Outer wall portion
33 Inner circumferential portion
40 Negative electrode can (negative electrode can for alkaline primary button battery)
41 Opening edge of negative electrode can
42 Top portion
44 Negative-electrode-can peripheral wall portion
45 Inner cylindrical portion
46 Folded-back portion
47 Outer cylindrical portion
51 First curved portion
51a Inner surface of first curved portion
52 Second curved portion
52a Outer surface of second curved portion
53 Third curved portion
53a Inner surface of third curved portion
L Common tangent line
O Axis line (central axis line)

## Claims

1. A negative electrode can for an alkaline primary button battery, which is formed in a capped cylindrical shape having a central axis line and is to be inserted into a positive electrode can, the negative electrode can comprising:
a top portion that extends along a direction orthogonal to an axial direction; and
a negative-electrode-can peripheral wall portion that extends from an outer peripheral edge of the top portion toward a first side in the axial direction,
wherein the negative-electrode-can peripheral wall portion includes
an inner cylindrical portion extending from the outer peripheral edge of the top portion toward an opening edge of the negative electrode can,
a folded-back portion folded back outward in a radial direction from an edge of the inner cylindrical portion on the first side in the axial direction, and
an outer cylindrical portion extending toward a second side in the axial direction from a radially outer end portion of the folded-back portion,
the inner cylindrical portion includes
a first curved portion extending in a curved manner from the outer peripheral edge of the top portion toward the first side in the axial direction,
a second curved portion extending in a curved manner outward in a radial direction from an edge of the first curved portion on the first side in the axial direction, and
a third curved portion extending in a curved manner from an outer peripheral edge of the second curved portion toward the first side in the axial direction,
a radius of curvature of an outer surface of the second curved portion, in a longitudinal cross section including the central axis line, is larger than a radius of curvature of an inner surface of the first curved portion in the longitudinal cross section and a radius of curvature of an inner surface of the third curved portion in the longitudinal cross section, and
an angle formed between a common tangent line of the inner surface of the first curved portion and the inner surface of the third curved portion in the longitudinal cross section and the axial direction is 40° or more and less than 60°.

2. The negative electrode can for an alkaline primary button battery according to Claim 1, wherein an end edge of the third curved portion on the first side in the axial direction is located on the first side in the axial direction with respect to an end edge of the outer cylindrical portion on the second side in the axial direction.

3. The negative electrode can for an alkaline primary button battery according to Claim 1 or 2, wherein an axial-direction dimension of the outer cylindrical portion is smaller than a radial-direction thickness of the folded-back portion in the longitudinal cross section.

4. An alkaline primary button battery comprising:
the negative electrode can for an alkaline primary button battery according to Claim 3;
a positive electrode can that is formed in a bottomed cylindrical shape, and has a bottom portion and a positive-electrode-can peripheral wall portion extending from an outer peripheral edge of the bottom portion toward the second side in the axial direction, in which the negative electrode can for an alkaline primary button battery is inserted into the positive electrode can; and
a gasket that is disposed between the positive-electrode-can peripheral wall portion and the negative-electrode-can peripheral wall portion, and is pressed against an outer peripheral surface of the negative electrode can by constricting an opening edge of the positive electrode can.

5. The alkaline primary button battery according to Claim 4,
wherein the gasket includes
an annular base portion extending along the opening edge of the negative electrode can,
an outer wall portion extending from the base portion into a space between the positive-electrode-can peripheral wall portion and the negative-electrode-can peripheral wall portion, and
an inner circumferential portion extending inward in the radial direction from the base portion, and
an inner end edge of the inner circumferential portion in the radial direction overlaps the top portion in the axial direction.

6. An alkaline primary button battery comprising:
a negative electrode can that is formed in a capped cylindrical shape having a central axis line, and includes a top portion extending along a direction orthogonal to an axial direction and a negative-electrode-can peripheral wall portion extending from an outer peripheral edge of the top portion toward a first side in the axial direction;
a positive electrode can that is formed in a bottomed cylindrical shape, and includes a bottom portion and a positive-electrode-can peripheral wall portion extending from an outer peripheral edge of the bottom portion toward a second side in the axial direction, the negative electrode can being inserted into the positive electrode can;
a gasket that is disposed between the positive-electrode-can peripheral wall portion and the negative-electrode-can peripheral wall portion, and is pressed against an outer peripheral surface of the negative electrode can by constricting an opening edge of the positive electrode can; and
a negative electrode terminal that is joined to the top portion,
wherein the negative-electrode-can peripheral wall portion includes
an inner cylindrical portion extending from the outer peripheral edge of the top portion toward an opening edge of the negative electrode can,
a folded-back portion folded back outward in a radial direction from an edge of the inner cylindrical portion on the first side in the axial direction, and
an outer cylindrical portion extending toward a second side in the axial direction from a radially outer end portion of the folded-back portion,
the inner cylindrical portion includes
a first curved portion extending in a curved manner from the outer peripheral edge of the top portion toward the first side in the axial direction,
a second curved portion extending in a curved manner outward in a radial direction from an edge of the first curved portion on the first side in the axial direction, and
a third curved portion extending in a curved manner from an outer peripheral edge of the second curved portion toward the first side in the axial direction,
a radius of curvature of an outer surface of the second curved portion, in a longitudinal cross section including the central axis line, is larger than a radius of curvature of an inner surface of the first curved portion in the longitudinal cross section and a radius of curvature of an inner surface of the third curved portion in the longitudinal cross section, and
an angle formed between a common tangent line of the inner surface of the first curved portion and the inner surface of the third curved portion in the longitudinal cross section and the axial direction is 40° or more and 50° or less.
